# EUROPEAN PATENT APPLICATION

(11) **EP 4 811 171 A1**
(43) Date of publication of application: **23.09.2026**
(21) Application number: 24907909.6
(22) Date of filing: 04.12.2024
(51) Int. Cl.: G06F 16/583, G06F 16/51, G06F 16/532, G06F 16/538, G06V 20/70, G06T 7/10

(54) **IMAGE TAGGING METHOD AND DEVICE**

(30) Priority: 22.12.2023 KR 20230190331
(71) Applicant: Samsung Electronics Co., Ltd., Suwon-si, Gyeonggi-do 16677 (KR)
(72) Inventor: JU, Jaeyong, Suwon-si, Gyeonggi-do 16677 (KR); CHO, Won, Suwon-si, Gyeonggi-do 16677 (KR)
(74) Representative: Gulde & Partner
(86) International application number: PCT/KR2024/019748
(87) International publication number: WO 2025/135625

(57) **Abstract**

A method of performing image tagging may include obtaining a plurality of image tags from an image using an image tag generating model, determining a degree of relevance between the plurality of image tags based on a plurality of area distribution maps respectively corresponding to each image tag of the plurality of image tags, generating a combined tag with interconnected image tags therein based on the degree of relevance, and performing image tagging on the image using the plurality of image tags and the combined tag.

## Description

### TECHNICAL FIELD

The disclosure relates to a method and apparatus for performing image tagging.

### BACKGROUND ART

With the development of the Internet and portable terminals, the supply and demand for content has rapidly increased. Particularly, content search and sharing have become easier by uploading content through social network services and registering keywords that may be used to search for the content so that others may search for and access the content.

In the case of visual content such as photos or videos, an image tag may be used as a search tool for the visual content. A user may search for content by using a search query including an image tag. As the sharing of content through the Internet has increased, the need for a search method for allowing a user to effectively access desired content has increased.

### DISCLOSURE OF INVENTION

### SOLUTION TO PROBLEM

Provided are a method and apparatus for performing image tagging by using image tags obtained using an image tag generating model and a combined tag with interconnected image tags therein.

Additional aspects will be set forth in part in the description which follows and, in part, will be apparent from the description, or may be learned by practice of the presented embodiments.

According to an embodiment of the disclosure, a method of performing image tagging may include obtaining a plurality of image tags from an image using an image tag generating model, determining a degree of relevance between the plurality of image tags based on a plurality of area distribution maps respectively corresponding to each image tag of the plurality of image tags, generating a combined tag with interconnected image tags therein based on the degree of relevance, and performing image tagging on the image using the plurality of image tags and the combined tag.

According to an embodiment of the disclosure, an apparatus for performing image tagging may include memory, and at least one processor operatively connected to the memory, wherein the at least one processor is configured to execute the at least one instruction to obtain a plurality of image tags from an image using an image tag generating model, determine a degree of relevance between the plurality of image tags based on a plurality of area distribution maps respectively corresponding to the plurality of image tags, generate a combined tag with interconnected image tags therein based on the degree of relevance, and perform image tagging on the image using the plurality of image tags and the combined tag.

According to an embodiment of the disclosure, a computer-readable recording medium having recorded thereon a program for executing the above method is provided.

### BRIEF DESCRIPTION OF DRAWINGS

The above and other aspects, features, and advantages of certain embodiments of the present disclosure will be more apparent from the following description taken in conjunction with the accompanying drawings, in which:
FIG. 1 is a diagram illustrating a process of obtaining an image tag and performing image tagging using an image tag generating model, according to an embodiment of the disclosure;
FIG. 2 is a diagram illustrating an image tag generating model according to an embodiment of the disclosure;
FIG. 3 is a flowchart illustrating a method of performing image tagging, according to an embodiment of the disclosure;
FIG. 4 is a flowchart of an operation of determining a degree of relevance between image tags, according to an embodiment of the disclosure;
FIG. 5 is a diagram illustrating a method of generating a combination of image tags, according to an embodiment of the disclosure;
FIG. 6 is a diagram illustrating a process of generating an area distribution map corresponding to an image tag, according to an embodiment of the disclosure;
FIG. 7 is a diagram illustrating a process of determining a degree of relevance between image tags corresponding to a combination of image tags, according to an embodiment of the disclosure;
FIG. 8 is a diagram illustrating an example of using an image tag generating model based on a transformer decoder, according to an embodiment of the disclosure;
FIG. 9 is a flowchart of an operation of generating a combined tag based on a degree of relevance between image tags, according to an embodiment of the disclosure;
FIG. 10 is a block diagram illustrating an electronic apparatus for performing image tagging, according to an embodiment of the disclosure;
FIG. 11 is a block diagram illustrating the configuration and operation of an electronic apparatus for performing image tagging, according to an embodiment of the disclosure;
FIG. 12 is a block diagram illustrating the operation of a degree-of-relevance analyzing module and a combined tag generating module, according to an embodiment of the disclosure; and
FIG. 13 is a block diagram illustrating the operation of a degree-of-relevance analyzing module and a combined tag generating module, according to an embodiment of the disclosure.

### MODE FOR THE INVENTION

Hereinafter, example embodiments of the disclosure will be described in detail with reference to the accompanying drawings. The same reference numerals are used for the same components in the drawings, and redundant descriptions thereof will be omitted. The embodiments described herein are example embodiments, and thus, the disclosure is not limited thereto and may be realized in various other forms. It is to be understood that singular forms include plural referents unless the context clearly dictates otherwise.

Terms used herein will be briefly described and then the disclosure will be described in detail. Throughout the disclosure, the expression "at least one of a, b or c" indicates only a, only b, only c, both a and b, both a and c, both b and c, all of a, b, and c, or variations thereof.

The terms used herein are those general terms currently widely used in the art in consideration of functions in the disclosure, but the terms may vary according to the intentions of those of ordinary skill in the art, precedents, or new technology in the art. Also, in some cases, there may be terms that are optionally selected by the applicant, and the meanings thereof will be described in detail in the corresponding portions of the disclosure. Thus, the terms used herein should be understood not as simple names but based on the meanings of the terms and the overall description of the disclosure.

As used herein, the singular forms "a," "an," and "the" may include the plural forms as well, unless the context clearly indicates otherwise. Unless otherwise defined, all terms (including technical or scientific terms) used herein may have the same meanings as commonly understood by those of ordinary skill in the art of the disclosure. Although terms including ordinals such as "first" or "second" may be used herein to describe various elements or components, these elements or components should not be limited by these terms. These terms are merely used to distinguish one element from other elements.

Throughout the disclosure, when something is referred to as "including" an element, one or more other elements may be further included unless otherwise specified. Also, as used herein, the terms such as "units" and "modules" may refer to units that perform at least one function or operation, and the units may be implemented as hardware or software or a combination of hardware and software.

Functions related to artificial intelligence according to an embodiment of the disclosure may be operated through a processor and memory. The processor may include one or more processors. In this case, the one or more processors may include a general-purpose processor such as a central processing unit (CPU), an application processor (AP), or a digital signal processor (DSP), a graphic-dedicated processor such as a graphic processing unit (GPU) or a vision processing unit (VPU), or an artificial intelligence-dedicated processor such as a neural processing unit (NPU). The one or more processors may control input data to be processed according to a predefined operation rule or artificial intelligence model stored in the memory. Alternatively, when the one or more processors include an artificial intelligence-dedicated processor, the artificial intelligence dedicated processor may be designed with a hardware structure specialized for processing a particular artificial intelligence model.

The predefined operation rule or artificial intelligence model may be characterized as being generated through training. Here, being generated through training may indicate that a basic artificial intelligence model is trained by a learning algorithm by using a plurality of pieces of training data and accordingly a predefined operation rule or artificial intelligence model set to perform a desired feature (or purpose) is generated. Such training may be performed in a machine itself in which artificial intelligence according to the disclosure is performed, or may be performed through a separate server and/or system. Examples of the learning algorithm may include, but are not limited to, supervised learning, unsupervised learning, semi-supervised learning, or reinforcement learning.

The artificial intelligence model may include a plurality of neural network layers. Each of the plurality of neural network layers may have a plurality of weights (weight values) and may perform a neural network operation through an operation between the plurality of weights and the operation result of a previous layer. The plurality of weights of the plurality of neural network layers may be optimized by the learning results of the artificial intelligence model. For example, the plurality of weights may be updated (refined) such that a loss value or a cost value obtained by the artificial intelligence model during the learning process may be reduced or minimized. The artificial neural network may include Deep Neural Network (DNN) and may include, for example, Convolutional Neural Network (CNN), Recurrent Neural Network (RNN), Restricted Boltzmann Machine (RBM), Deep Belief Network (DBN), Bidirectional Recurrent deep Neural Network (BRDNN), or Deep Q-Networks but is not limited to the examples described above.

Hereinafter, embodiments of the disclosure will be described in detail with reference to the accompanying drawings so that those of ordinary skill in the art may implement the disclosure. However, the disclosure may be embodied in many different forms and should not be construed as being limited to the embodiments set forth herein.

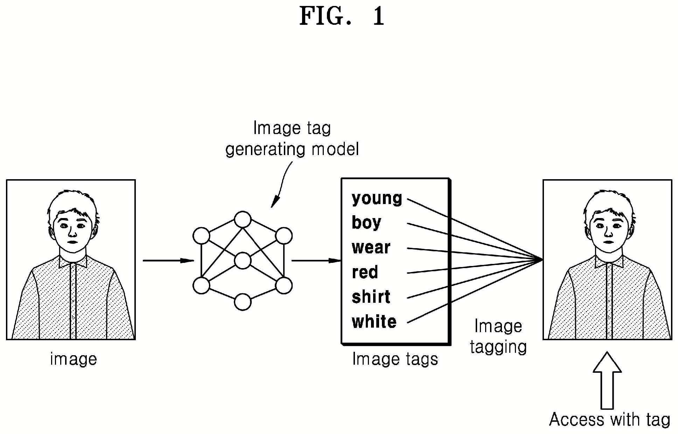

FIG. 1 is a diagram illustrating a process of obtaining an image tag and performing image tagging using an image tag generating model, according to an embodiment of the disclosure.

Herein, an 'image' may refer to visualized information such as each frame constituting a photograph, a picture, an illustration, a graph, a map, or a video.

Herein, an 'image tag' may include information about something visually seen in the image, such as color or shape, or information about what the image relates to. For example, the image tag may be in a form including information about an object or scene in the image. Alternatively, the image tag may be in a form including information about a particular object or event with a unique name and a particular position or time. Alternatively, the image tag may be in a form including information about an abstract emotion or existence.

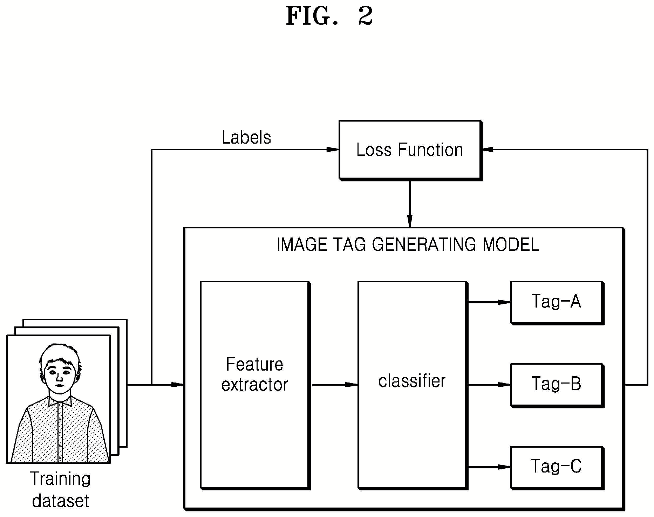

According to an embodiment of the disclosure, the image tag may be obtained by using an image tag generating model. The image tag generating model may receive an image as an input to output at least one image tag. As illustrated in FIG. 1, the image tag generating model may receive an image of 'a boy wearing a red shirt on a white background' as an input to output various image tags such as 'young', 'boy', 'wear', 'red', 'shirt', and 'white'. An operation of the image tag generating model will be described below with reference to FIG. 2.

Herein, 'image tagging' may refer to an operation of associating and storing an image with a tag for the image. Image tagging may be performed by storing an image and a tag for the image in association with each other such that the tag for the image may be obtained from the image or the image may be obtained from the tag for the image. For example, image tagging may be performed by storing an image with tags for the image such that one of the tags refers to another. Alternatively, image tagging may be performed by additionally storing data of a tag for an image in a space where data of the image is stored. Image tagging may be manual tagging by a person or automatic tagging by a computer or machine. Herein, image tagging is assumed to be automatic tagging by a computer or machine; however, manual tagging may be applied in some processes.

According to an embodiment of the disclosure, image tagging may be performed by associating and storing an image with one or more tags for the image. FIG. 1 illustrates image tagging that associates and stores an image of 'a boy wearing a red shirt on a white background' with image tags 'young', 'boy', 'wear', 'red', 'shirt', and 'white' for the image. As such, in the case of an image on which image tagging has been performed, the image may be retrieved by using an image tag for the image tagging as an image search query. In the case of the example illustrated in FIG. 1, when 'shirt' is input as a search query to a database in which an image is stored, all images tagged with 'shirt', including the image of FIG. 1, may be retrieved.

FIG. 2 is a diagram illustrating an image tag generating model according to an embodiment of the disclosure.

The image tag generating model may recognize an image and extract an image tag for the image. A neural network model trained by using a training dataset to generate an image tag may generate at least one image tag for an image by recognizing the image. An apparatus for performing image tagging may generate an image tag based on feature information extracted from an image by using the image tag generating model. The image tag generating model may generate at least one image tag based on the feature information extracted from the image.

The image tag generating model may be trained by using a training dataset. The training dataset may include labeled input data so as to learn to output an image tag from an image. For the image tag generating model, a loss corresponding to the difference between an actual image tag corresponding to an input image and an image tag output from the image tag generating model may be determined. The apparatus for performing image tagging may perform training of the image tag generating model through backpropagation in a direction in which a loss of a loss function decreases. The apparatus for performing image tagging may treat that the treating of the image tag generating model is completed, when a loss determined in the process of training the image tag generating model is minimized.

As illustrated in FIG. 2, the image tag generating model may be in the form of a multi-label recognition model. The multi-label recognition model may be in the form of a neural network including a plurality of layers. The multi-label recognition model may be in a form including additional layers for generating a tag, each of which receives the output of shared backbone layers and a shared backbone as an input. The multi-label recognition model may include a feature extractor for extracting feature information and a classifier for generating an image tag by using the feature information extracted from the feature extractor. For example, as illustrated in FIG. 2, the image tag generating model may be a multi-label recognition model in the form of connecting a plurality of classification heads for generating an image tag to a feature extractor for extracting feature information from an image.

The feature extractor may extract information about components constituting an image. For example, the feature extractor may extract information about the edge of each image. The feature extractor may extract information about the color of each image. The feature extractor may extract information about the brightness or contrast of each image. The feature extractor may include an image encoder.

The classifier may perform a task of generating different types of image tags. The classifier may be an operator for performing a certain operation or may be in the form of a neural network including layers. For example, in FIG. 2, Tag-A may be an image tag about an object in the image. Tag-B may be an image tag about an attribute or motion in the image. Tag-C may be an image tag inferring a scene in the image.

A predictor may generate tags corresponding to different tag domains. For example, the predictor may generate 'boy' or 'shirt' as Tag-A. The predictor may generate 'young' or 'red' or 'white' as Tag-B. The predictor may generate 'wear' as Tag-C.

The image tag generating model may independently generate image tags including objects, attributes, motions, or the like. This may be because the training dataset used to train the image tag generating model is independently labeled with an object, an attribute, a motion, or the like corresponding to the class recognized in each image. The image tag generating model may only independently generate each image tag and may not generate an image tag by associating image tags related to each other. Thus, as for the input image, the image tag generating model may generate an image tag about an attribute or motion in the image, but the image tag may not indicate the attribute of which object in the image it corresponds to or the motion of which object in the image it corresponds to.

For example, among the image tags corresponding to the image of FIG. 1, 'red' and 'white' may be image tags related to the color included in the image, but may not indicate which object in the image they are related to. Thus, with respect to images tagged with image tags, when the user inputs a search query 'white shirt' to search for a photo of 'a person wearing a white shirt', there may be a problem in that the image of FIG. 1 having both 'white' and 'shirt' as image tags may also be retrieved as a search result.

In order to solve this problem, it may be necessary to be able to recognize an object wot which a class about an attribute or motion relates. For this purpose, an object corresponding to the class recognized in each image of the training dataset used to train the image tag generating model and an attribute or motion of the object should be labeled in the form of being associated with each other. However, because it may be costly and time-consuming to generate a training dataset with additional labels in the form of being associated with objects and attributes or motions of the objects and the number of labels (e.g., white shirt, red shirt, and the like) may increase exponentially, it may be practically difficult to train the image tag generating model.

Hereinafter, a detailed description will be made of a method of performing image tagging by using an image tag generated from the image tag generating model and an image tag extended from the generated image tag.

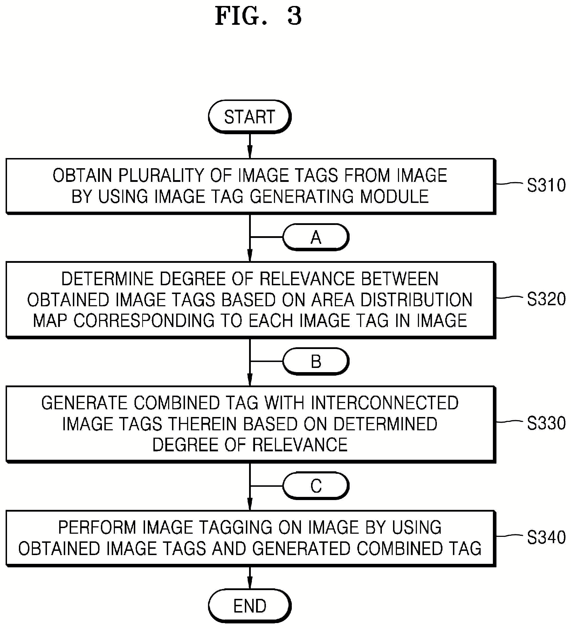

FIG. 3 is a flowchart illustrating a method of performing image tagging, according to an embodiment of the disclosure.

Referring to FIG. 3, in operation S310, the apparatus for performing image tagging may obtain a plurality of image tags from an image by using an image tag generating model.

The apparatus for performing image tagging may be an electronic apparatus or server capable of obtaining an image or may be an electronic apparatus including a camera for obtaining an image. For example, the apparatus may be an image processing device such as a smartphone, smart glasses, a wearable device, a digital camera, a notebook computer, an augmented reality (AR) device, or a virtual reality (VR) device.

The apparatus for performing image tagging may be mounted with various types of neural network models. For example, the apparatus for performing image tagging may be mounted with at least one of models such as CNN, DNN, RNN, and BRDNN, or a combination thereof.

The image may be obtained by photographing in the apparatus for performing image tagging or may be received from an external device. The apparatus for performing image tagging may generate a plurality of image tags from the image. The apparatus for performing image tagging may use an image tag generating model. The image tag generating model may classify a class corresponding to an image tag based on the features extracted from an input image.

In operation S320, the apparatus for performing image tagging may determine a degree of relevance between the obtained image tags based on an area distribution map corresponding to each image tag in the image. The apparatus for performing image tagging may generate an area distribution map corresponding to each image tag. That is, the apparatus for performing image tagging may generate a plurality of area distribution maps respectively corresponding to the plurality of image tags. The apparatus for performing image tagging may obtain the degree of relevance between the obtained image tags by comparing the generated area distribution maps.

The area distribution map corresponding to the image tag may include information about which portion in the image has influenced classification as the class when generating an image tag by classifying the class from the image. The area distribution map corresponding to the image tag may refer to a portion of the image used in the process of generating an image tag and is not limited to its name. The area distribution map may be a visualization of a portion of the image related to the image tag. For example, the area distribution map may be based on an activation map specifying a portion that has functioned (activation) to generate the image tag (classification as a class corresponding to the image tag). Alternatively, the area distribution map may be based on an attention map that may indicate which portion of the image has been focused on when generating the image tag. Alternatively, the area distribution map may be based on a feature map that may indicate which feature in the image has been extracted when generating the image tag. Thus, the area distribution map corresponding to the image tag may also be referred to as an activation map, a class activation map, an attention map, a feature map, or the like.

The degree of relevance between the image tags may refer to the degree to which a plurality of image tags are related and associated with each other. The degree of relevance between the image tags may be determined for two or more image tags. When there is a relationship between the image tags, the degree of relevance therebetween may be high. For example, a first image tag representing a first object and a second image tag representing an attribute of the first object may be said to have a high degree of relevance. On the other hand, a first image tag representing a first object and a third image tag representing an attribute of a second object different from the first object may be said to have a low degree of relevance.

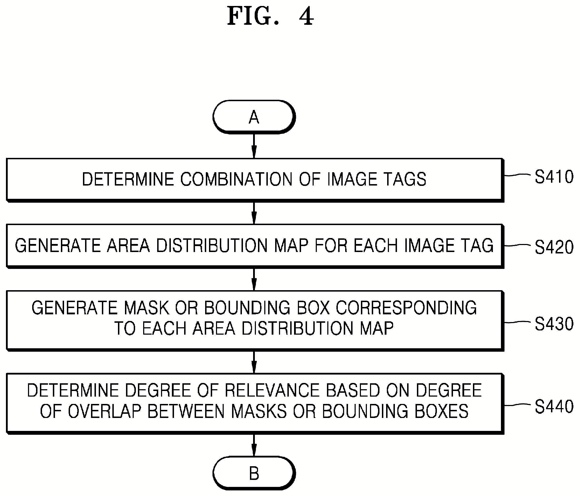

FIG. 4 is a detailed flowchart of an operation of determining a degree of relevance between image tags, according to an embodiment of the disclosure.

In operation S410, the apparatus for performing image tagging may determine a combination of image tags from among the obtained image tags. The apparatus for performing image tagging may determine a combination of image tags by selecting image tags for determining the degree of relevance between image tags from among the obtained image tags. When the number of obtained image tags is small, the apparatus for performing image tagging may determine all combinations of image tags and determine the degree of relevance between image tags for each combination of image tags. As the number of obtained image tags increases, determining all combination of image tags and determining the degree of relevance between image tags for each combination of image tags may be burdensome in terms of the calculation amount.

The apparatus for performing image tagging may determine two or more image tags from among a plurality of image tags as a combination of image tags. The apparatus for performing image tagging may determine a combination of image tags from the selected image tags according to the word classes of the obtained image tags or according to whether the obtained image tags are in a relationship corresponding to an object and a property of the object.

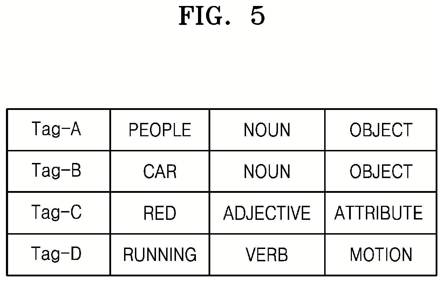

FIG. 5 is a diagram illustrating a method of generating a combination of image tags, according to an embodiment of the disclosure.

Referring to FIG. 5, an example in which a total of four image tags are obtained from one image is illustrated; however, the number of image tags is not limited thereto. Tag-A may be an image tag 'people', may be a noun, and may correspond to an object in the image. Tag-B may be an image tag 'car', may be a noun, and may correspond to an object in the image. Tag-C may be an image tag 'red', may be an adjective, and may correspond to an attribute of an object in the image. Tag-D may be an image tag 'running', may be a verb, and may correspond to a motion of an object in the image.

According to an embodiment of the disclosure, when an operation of selecting image tags for determining a degree of relevance between image tags from among the obtained image tags is not performed, the apparatus for performing image tagging may generate all possible combinations of image tags. In the example of FIG. 5, the apparatus for performing image tagging may generate a combination of image tags including two image tags, three image tags, or four image tags from among four image tags. The combination of image tags including two image tags may include (Tag-A, Tag-B), (Tag-A, Tag-C), (Tag-A, Tag-D), (Tag-B, Tag-C), (Tag-B, Tag-D), and (Tag-C, Tag-D) (that is, a total of six combinations). The combination of image tags including three image tags may include (Tag-A, Tag-B, Tag-C), (Tag-A, Tag-B, Tag-D), (Tag-B, Tag-C, Tag-D), and (Tag-A, Tag-C, Tag-D) (that is, a total of four combinations). The combination of image tags including four image tags may include (Tag-A, Tag-B, Tag-C, Tag-D) (that is, a total of one combination). The combination of image tags may include a combination of image tags that are not suitable as a search query or are generally unrelated to each other. For example, in the example of FIG. 5, the combination of (Tag-C, Tag-D) may be a combination of image tags of (red, running) or (running, red), which may be a combination of image tags that are unrelated to each other.

According to an embodiment of the disclosure, the apparatus for performing image tagging may generate a combination of image tags by selecting image tags from among the obtained image tags according to the word classes of image tags. The apparatus for performing image tagging may determine a combination of image tags by identifying the word class of each image tag. For example, referring to FIG. 5, the apparatus for performing image tagging may determine a combination of image tags of (Tag-B, Tag-C) according to the form of 'adjective + noun', for example, 'red car'. Also, the apparatus for performing image tagging may determine a combination of image tags of (Tag-A, Tag-D) according to the form of 'verb + noun', for example, 'running people'. Also, the apparatus for performing image tagging may determine a combination of image tags of (Tag-B, Tag-C, Tag-D) according to the form of 'verb + adjective + noun', for example, 'running red car'.

According to an embodiment of the disclosure, the apparatus for performing image tagging may generate a combination of image tags by selecting image tags from among the obtained image tags according to whether the image tags are in a relationship corresponding to an object and a property of the object. The apparatus for performing image tagging may determine a combination of image tags based on whether each image tag relates to an object or to an attribute or motion of the object. For example, referring to FIG. 5, the apparatus for performing image tagging may determine a combination of image tags of (Tag-B, Tag-C) according to the form of 'attribute of object + object', for example, 'red car'. Also, the apparatus for performing image tagging may determine a combination of image tags of (Tag-A, Tag-D) according to the form of 'motion of object + object', for example, 'running people'. Also, the apparatus for performing image tagging may determine a combination of image tags of (Tag-B, Tag-C, Tag-D) according to the form of 'motion of object + attribute of object + object', for example, 'running red car'.

According to an embodiment of the disclosure, the apparatus for performing image tagging may generate a combination of image tags by identifying the word classes of the obtained image tags and whether the obtained image tags are in a relationship corresponding to an object and a property of the object.

The apparatus for performing image tagging may determine a combination of image tags that are likely to be a search query. On the contrary, the apparatus for performing image tagging may exclude a combination of image tags that are unsuitable for a search query or may not be a search query.

According to an embodiment of the disclosure, the apparatus for performing image tagging may use a lookup table, which the user may have predesignated according to the general definitions or meanings of words corresponding to image tags, to determine a combination of image tags.

According to an embodiment of the disclosure, the apparatus for performing image tagging may use an ontology database about words corresponding to image tags to determine a combination of image tags. The ontology database may represent concepts or properties of objects, relationships with other objects, or the like in a form that may be processed by a computer. A second image tag corresponding to another word retrieved from the ontology database for a word corresponding to a first image tag may be a combination of image tags together with the first image tag.

According to an embodiment of the disclosure, the apparatus for performing image tagging may use a word association analyzing model about words corresponding to image tags to determine a combination of image tags. The word association analyzing model may be a model that may receive two or more words as an input to output a numerical value representing the general association between the input words. When a word corresponding to the first image tag and a word corresponding to the second image tag are input to the word association analyzing model and a numerical value greater than or equal to a defined threshold value is output accordingly, the first image tag and the second image tag may be a combination of image tags.

Referring back to FIG. 4, in operation S420, the apparatus for performing image tagging may generate an area distribution map for each image tag. When the apparatus for performing image tagging determines a combination of image tags from the selected image tags among the obtained image tags, the apparatus for performing image tagging may generate an area distribution map for each image tag belonging to the combination of image tags.

Because the area distribution map corresponding to an image tag represents a portion of the image used in the process of generating the image tag, it may have a different area distribution map for each image tag. When the image tags have similar area distribution maps, it may indicate that portions of the image used to generate the image tags are similar to each other.

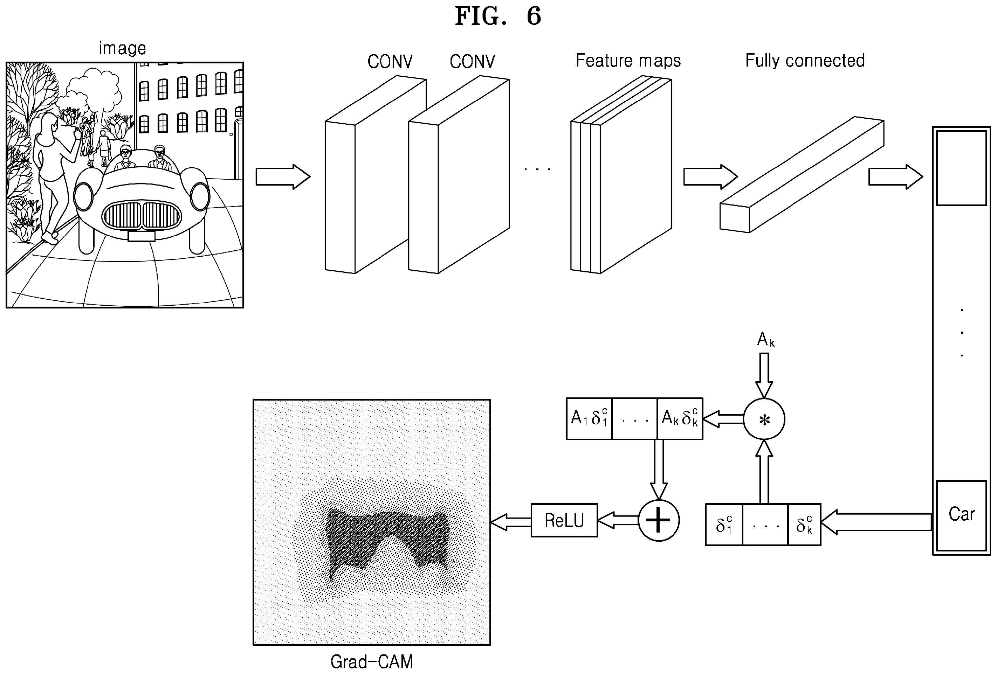

FIG. 6 is a diagram illustrating a process of generating an area distribution map corresponding to an image tag, according to an embodiment of the disclosure.

An image tag generating model according to an embodiment of the disclosure may be, but is not limited thereto, a CNN model including a plurality of convolution layers and a fully-connected layer connected to a feature map, as illustrated in FIG. 6. Referring to FIG. 6, the image tag generating model may receive an image as an input to recognize a class 'car' and may generate an image tag 'car' accordingly.

The area distribution map illustrated in FIG. 6 may be an example of an activation map specifying a portion that has functioned to generate an image tag 'car' (i.e., classification as a class corresponding to the image tag) and may represent an example based on Grad-CAM (Class Activation Map); however, embodiments of the disclosure is not limited thereto. An equation for determining a Grad-CAM score for class 'C' may be as in Equation (1). ${L}_{Grad - CAM}^{C} = ReLU \left({\sum }_{k} {δ}_{k}^{C} {A}^{k}\right) , {δ}_{k}^{C} = \frac{1}{Z} {\sum }_{i} {\sum }_{j} \frac{\partial {y}_{C}}{\partial {A}_{i , j}^{k}}$

In Equation (1), C denotes a class, *A^{k}* denotes a kth feature map, ${δ}_{k}^{C}$ denotes a weight (influence of the feature map) for the kth feature map for classification as class 'C', ${A}_{i , j}^{k}$ denotes the value of a (i,j) position in the kth feature map, and Z denotes a feature map-wise sum. In Grad-CAM, the weight for each feature map may be determined through partial differentiation rather than learning.

Referring to FIG. 6, a heatmap may be generated by multiplying each feature map ${A}_{i , j}^{k}$ by ${δ}_{k}^{C}$, which is a pixel-wise average value of the gradient for the kth feature map for classification as a class corresponding to an image tag 'car', a pixel-wise sum may be performed thereon, and then, a class activation map may be obtained by applying a ReLU function.

Referring back to FIG. 4, in operation S430, the apparatus for performing image tagging may generate a mask or a bounding box corresponding to each area distribution map generated for each image tag. The mask or the bounding box may be a result of processing for specifying an area used to distinguish a portion in an image used to generate an image tag, and a method of processing for specifying the area is not limited thereto.

According to an embodiment of the disclosure, the apparatus for performing image tagging may generate a mask corresponding to each area distribution map generated for each image tag. That is, the apparatus may generate a plurality of masks respectively corresponding to the plurality of image tags. The mask corresponding to the area distribution map may be a binary mask. For example, the binary mask corresponding to the area distribution map may represent a portion used to generate an image tag by performing binarization processing (setting the value to 1 when the score is greater than or equal to a threshold value and setting the others to 0) in the area distribution map.

According to an embodiment of the disclosure, the apparatus for performing image tagging may generate a bounding box corresponding to each area distribution map generated for each image tag. That is, the apparatus may generate a plurality of bounding boxes respectively corresponding to the plurality of image tags. The bounding box corresponding to the area distribution map may represent a certain area including a portion used to generate an image tag by surrounding a certain area including a portion used to generate an image tag with a figure such as a square in the area distribution map.

In operation S440, the apparatus for performing image tagging may determine a degree of relevance between image tags based on the degree of overlap between the masks or the bounding boxes respectively corresponding to the area distribution maps generated for the respective image tags.

The degree of relevance between image tags may refer to a general degree of relevance between words corresponding to image tags and also may refer to a degree of relevance between image tags in a particular image. The apparatus for performing image tagging may compare the degree of similarity between the masks or the bounding boxes respectively corresponding to the area distribution maps generated for the respective image tags for a particular image.

According to an embodiment of the disclosure, when generating a mask corresponding to each area distribution map generated for each image tag, the apparatus for performing image tagging may determine a degree of relevance between the obtained image tags based on the degree of overlap between the generated masks. The apparatus for performing image tagging may determine an Intersection of Union (IoU) between the masks corresponding to the image tags.

According to an embodiment of the disclosure, when generating a bounding box corresponding to each area distribution map generated for each image tag, the apparatus for performing image tagging may determine a degree of relevance between the obtained image tags based on the degree of overlap between the generated bounding boxes. The apparatus for performing image tagging may determine an IoU between the bounding boxes corresponding to the image tags.

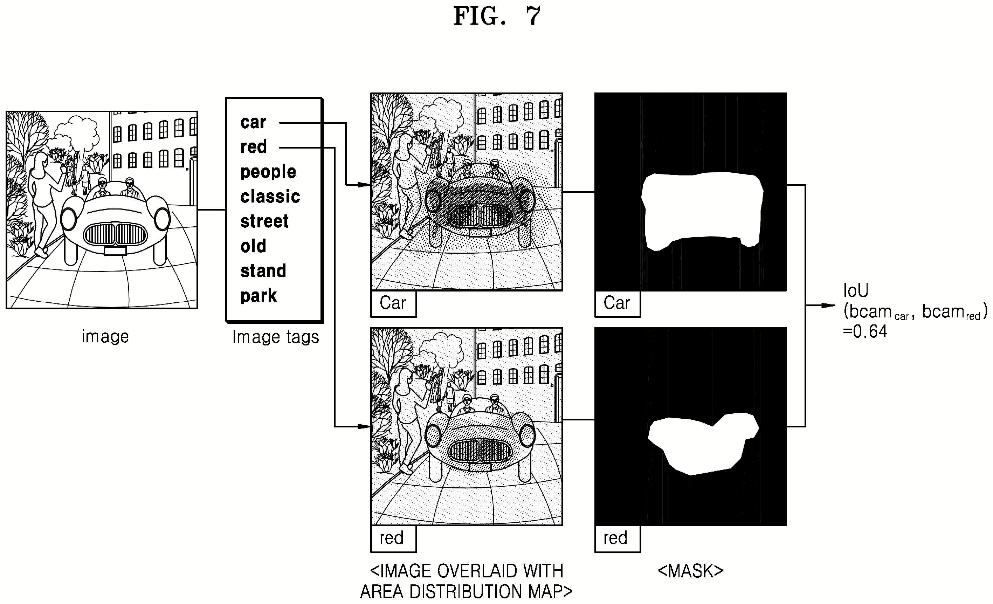

FIG. 7 is a diagram illustrating a process of determining a degree of relevance between image tags corresponding to a combination of image tags, according to an embodiment of the disclosure.

Referring to FIG. 7, a plurality of image tags may be obtained from an image of a red car. The plurality of image tags may include 'car', 'red', 'people', 'street', 'old', 'stand', 'park', and the like. FIG. 7 illustrates a process of determining a degree of relevance between a first image tag 'car' and a second image tag 'red' among the plurality of image tags.

Referring to FIG. 7, a first area distribution map corresponding to the first image tag 'car' may represent information about a portion of the image that has influenced classification as a class corresponding to the first image tag in the image. The first area distribution map corresponding to the first image tag 'car' may be visualized such that an area recognized as a car in the image is distinguished from areas other than the car. The first area distribution may be displayed in different colors depending on the degree to which a portion of the image has influenced classification as a class corresponding to the first image tag. A first mask corresponding to the first area distribution (or the first class activation map) may be obtained by performing binarization processing on the class activation map (setting the value to 1 when the score is greater than or equal to a threshold value and setting the others to 0) and may distinguish a portion used to generate the first image tag.

A second area distribution map corresponding to the second image tag 'red' may represent information about a portion of the image that has influenced classification as a class corresponding to the second image tag in the image. The second area distribution map corresponding to the second image tag 'red' may be visualized such that an area recognized as a red color in the image is distinguished from the other areas. The second area distribution may be displayed in different colors depending on the degree to which a portion of the image has influenced classification as a class corresponding to the second image tag. A second mask corresponding to the second area distribution map (or the second class activation map) may be obtained by performing binarization processing on the class activation map and may distinguish a portion used to generate the second image tag.

The apparatus for performing image tagging may obtain a degree of overlap between the first mask corresponding to the first area distribution map and the second mask corresponding to the second area distribution map. Referring to FIG. 7, the degree of overlap between the first mask and the second mask may be obtained by determining an IoU value between an unmasked area in the first mask and an unmasked area in the second mask. In FIG. 7, because the IoU between the first mask and the second mask is '0.64', the first image tag 'car' and the second image tag 'red' may be determined to have a degree of relevance of 64 %.

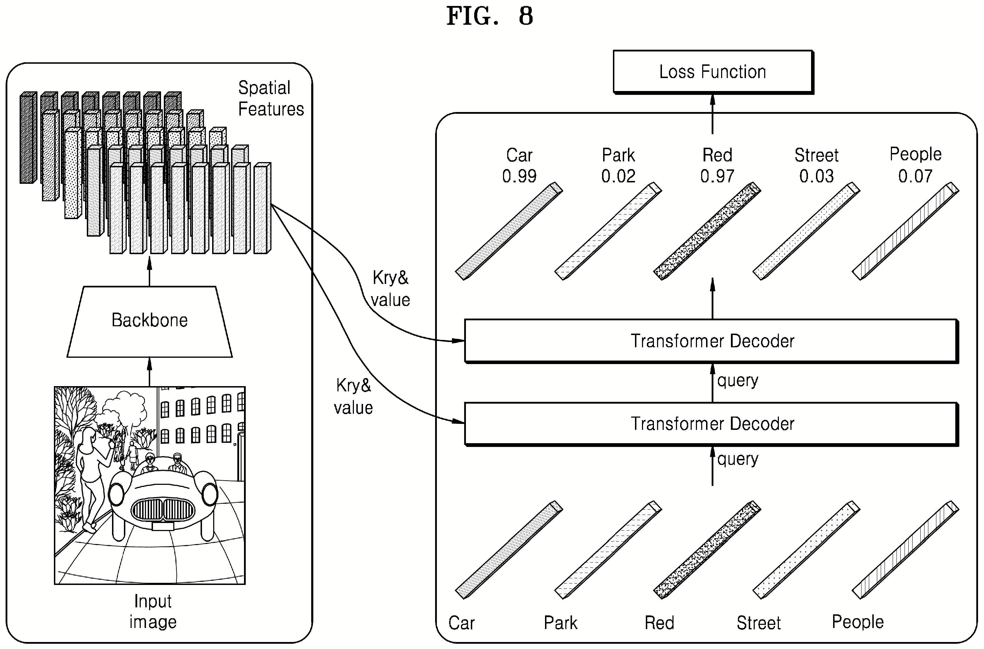

FIG. 8 is a diagram illustrating an example of using an image tag generating model based on a transformer decoder, according to an embodiment of the disclosure.

Referring to FIG. 8, the image tag generating model based on a transformer decoder may include backbone layers extracting spatial features from an input image, a multi-layer transformer decoder receiving the spatial features output from the backbone layers as an input, and a linear projection layer. The multi-layer transformer decoder may perform query updating and adaptive feature pooling, and the linear projection layer may perform logit determination of each image tag.

The transformer decoder of each layer may perform cross attention on the spatial features output from the backbone layers and the label embedding corresponding to each image tag used as a query. Also, the transformer decoder of each layer may perform self-attention based on the label embedding corresponding to each image tag output from the transformer decoder of the previous layer and update the label embedding corresponding to each image tag used as a query.

The label embedding corresponding to each image tag may be updated for each layer of the multi-layer transformer decoder and may reflect the spatial feature extracted from the image through cross-attention. The area distribution map corresponding to the image tag may be generated based on a cross-attention map based on which spatial feature extracted from the image influences the label embedding corresponding to each image tag. The apparatus for performing image tagging may determine a degree of relevance between the image tags based on the area distribution map based on the cross-attention map corresponding to each image tag.

Referring back to FIG. 3, in operation S330, the apparatus for performing image tagging may generate a combined tag with interconnected image tags therein based on the determined degree of relevance between the image tags. Herein, the 'combined tag' may refer to an image tag generated by interconnecting image tags. The combined tag may be obtained by concatenating and interconnecting image tags in a certain order. The combined tag may be obtained by changing the ending of an image tag among the image tags and connecting the resulting image tag to another image tag. The interconnected image tags may be divided by a gap.

The apparatus for performing image tagging may determine the connection order of image tags in order to connect the image tags. For example, when there are a first image tag and a second image tag, the apparatus for performing image tagging may interconnect the first image tag and the second image tag as 'first image tag + second image tag' such that the first image tag comes first or may interconnect the first image tag and the second image tag as 'second image tag + second image tag' such that the second image tag comes first.

In order to interconnect the image tags, the apparatus for performing image tagging may determine whether to change an ending thereof when a predicate such as a verb or an adjective is conjugated. For example, when there is a first image tag that is a verb and a second image tag that is a noun, the apparatus for performing image tagging may determine whether to change an ending thereof when the first image tag is a verb infinitive when the first image tag that and the second image tag are interconnected such that the first image tag comes first.

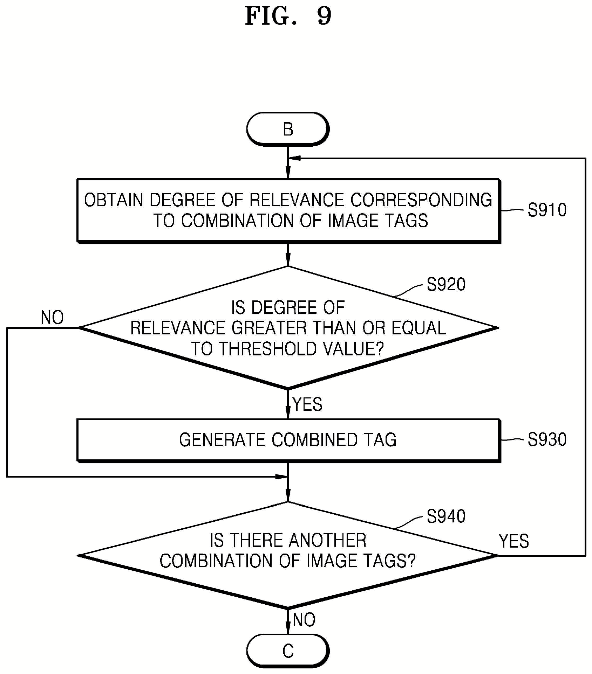

FIG. 9 is a flowchart of an operation of generating a combined tag based on a degree of relevance between image tags, according to an embodiment of the disclosure.

In operation S910, the apparatus for performing image tagging may obtain a degree of relevance corresponding to a combination of image tags. The apparatus for performing image tagging may obtain a degree of relevance between image tags belonging to a combination of image tags.

In operation S920, the apparatus for performing image tagging may determine whether the degree of relevance corresponding to the combination of image tags is greater than or equal to a defined threshold value. The apparatus for performing image tagging may determine whether the degree of relevance between image tags belonging to the combination of image tags is greater than or equal to a defined threshold value.

If the degree of relevance is less than the threshold value, then the apparatus may proceed to operation S940,

In operation S930, the apparatus for performing image tagging may generate a combined tag with interconnected image tags therein based on the degree of relevance corresponding to the combination of image tags being greater than or equal to a defined threshold value, that is, based on the degree of relevance between image tags belonging to the combination of image tags being greater than or equal to a defined threshold value. The apparatus for performing image tagging may determine the connection order of image tags based on the probability of being input as a search query, determine whether to change the ending of the image tag, and interconnect the image tags to generate a combined tag.

In the example of FIG. 7, when the threshold value for determining the degree of relevance between two image tags is 60 %, because the degree of relevance of the first image tag 'car' and the second image tag 'red' is '64 %', a new image tag 'red car' may be generated.

In operation S940, by determining whether there is another combination of image tags, the apparatus for performing image tagging may proceed again from operation S910 when there is another combination of image tags and may end the operation of generating a combined tag when there is no more combination of image tags.

Referring back to FIG. 3, in operation S340, the apparatus for performing image tagging may perform image tagging on the image by using the obtained image tags and the generated combined tag. The apparatus for performing image tagging may perform image tagging on the image by adding the generated combined tag as well as the image tags obtained by using the image tag generating model. The apparatus for performing image tagging may store an image tag for an image and the generated combined tag in the image in association with each other.

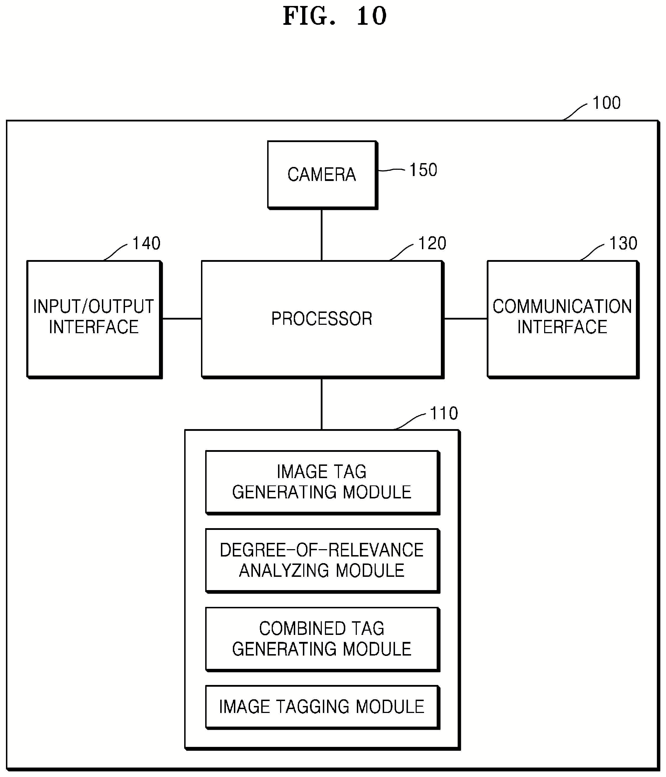

FIG. 10 is a block diagram illustrating an electronic apparatus 100 for performing image tagging, according to an embodiment of the disclosure.

Referring to FIG. 10, the electronic apparatus 100 for performing image tagging according to an embodiment of the disclosure may include memory 110, a processor 120, a communication interface 130, an input/output interface 140, and a camera 150.

The memory 110 may store instructions, data structures, and program code readable by the processor 120. In an embodiment of the disclosure, the operations performed by the processor 120 may be implemented by executing the program instructions or program code stored in the memory 110.

The memory 110 may include a flash memory type memory, a hard disk type memory, a multimedia card micro type memory, or a card type memory (e.g., secure digital (SD) or XD memory) and may include a nonvolatile memory including at least one of a read-only memory (ROM), an electronically erasable programmable ROM (EEPROM), a programmable ROM (PROM), a magnetic memory, a magnetic disk, or an optical disk and a volatile memory such as a dynamic random-access memory (RAM) (DRAM) or a static RAM (SRAM).

The memory 110 according to an embodiment of the disclosure may store one or more instructions and/or programs for controlling the electronic apparatus 100 for performing image tagging to process an image. For example, the memory 110 may store an image tag generating module, a degree-of-relevance analyzing module, a combined tag generating module, and an image tagging module. When training of an artificial intelligence model is required in the electronic apparatus 100 for performing image tagging, a model learning module may be further mounted thereon.

The processor 120 may control the operation or function performed by the electronic apparatus 100 for performing image tagging by executing instructions or programmed software modules stored in the memory 110. The processor 120 may include hardware components for performing arithmetic, logic, and input/output operations and signal processing. By executing one or more instructions stored in the memory 110, the processor 120 may control overall operations of the electronic apparatus 100 for performing image tagging.

The processor 120 may include, for example, at least one of a central processing unit, a microprocessor, a GPU, application specific integrated circuits (ASICs), digital signal processors (DSPs), digital signal processing devices (DSPDs), programmable logic devices (PLDs), field programmable gate arrays (FPGAs), an application processor, a neural processing unit, or an artificial intelligence-dedicated processor designed in a hardware structure specialized for processing of an artificial intelligence model; however, embodiments of the disclosure is not limited thereto. Each processor constituting the processor 120 may be a dedicated processor for performing a certain function.

The communication interface 130 may perform wired/wireless communication with another device or network. The communication interface 130 may include a communication circuit or a communication module that supports at least one of various wired/wireless communication methods. For example, the communication interface 130 may perform data communication between the electronic apparatus 100 for performing image tagging and other devices, by using at least one of data communication methods including wired LAN, wireless LAN, WiFi, Bluetooth, ZigBee, WiFi Direct (WFD), Infrared Data Association (IrDA), Bluetooth Low Energy (BLE), Near Field Communication (NFC), Wireless Broadband Internet (WiBro), World Interoperability for Microwave Access (WiMAX), Shared Wireless Access Protocol (SWAP), Wireless Gigabit Alliances (WiGig), and RF communication.

The communication interface 130 according to an embodiment of the disclosure may receive, from an external device, an artificial intelligence model or an image used to perform image tagging. For example, the communication interface 130 may receive, from a server, an artificial intelligence model or a database trained in the server. The communication interface 130 may receive an image from another electronic apparatus. The communication interface 130 may share an image generated by the electronic apparatus 100 for performing image tagging with another user or transmit the image to an external device such that the image may be displayed on the external device.

The communication interface 130 according to an embodiment of the disclosure may transmit, to the server, an image obtained by the electronic apparatus 100 for performing image tagging or information about the image or receive an image from the server. For example, the communication interface 130 may transmit, to the server, an image obtained by the electronic apparatus 100 for performing image tagging or an image received from another electronic apparatus. For example, the communication interface 130 may transmit, to the server, an image obtained by the electronic apparatus 100 for performing image tagging or an image received from another electronic apparatus. The communication interface 130 may receive, from the server 200, an image stored in the server 200.

The input/output interface 140 may include an output unit for providing information or an image and may further include an input unit for receiving an input. The output unit may include a display panel and a controller for controlling the display panel and may be implemented in various ways such as an organic light emitting diode (OLED) display, an active-matrix organic light emitting diode (AM-OLED) display, and a liquid crystal display (LCD). The input unit may receive various types of inputs from the user and may include at least one of a touch panel, a keypad, or a pen recognition panel. The input/output interface 140 may be provided in the form of a touch screen in which a display panel and a touch panel are combined with each other and may be implemented in a flexible or foldable manner.

The input/output interface 140 according to an embodiment of the disclosure may obtain information about an image from the user. The user may select an image for performing image tagging from among a plurality of images through the input/output interface 140. The input/output interface 140 may receive a user input for control commands or information required in the process of performing image tagging.

The camera 150 may be a hardware module for obtaining an image. The camera 150 may obtain an image. The camera 150 may include at least one camera module and may support functions such as depth, telephoto, wide-angle, and ultra-wide-angle depending on the specifications of the electronic apparatus 100 for performing image tagging. Unless an image is directly obtained by using the electronic apparatus 100 for performing image tagging, the camera 150 may be excluded from the electronic apparatus 100 for performing image tagging.

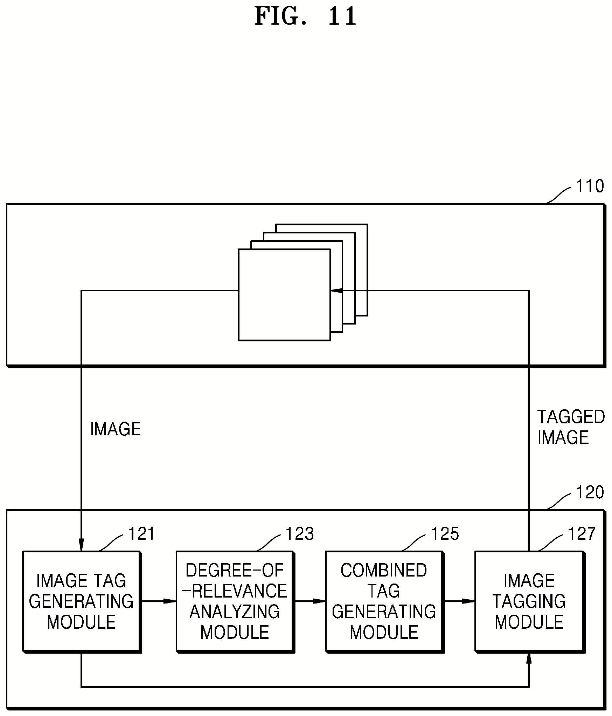

FIG. 11 is a block diagram illustrating the configuration and operation of an electronic apparatus 100 for performing image tagging, according to an embodiment of the disclosure.

Referring to FIG. 11, the electronic apparatus 100 for performing image tagging may include memory 110 storing at least one instruction, and at least one processor 120 operatively connected to the memory 110 to execute the at least one instruction. The processor 120 may execute the at least one instruction to load and execute commands or code for an image tag generating module 121, a degree-of-relevance analyzing module 123, a combined tag generating module 125, and an image tagging module 127.

The processor 120 may execute the at least one instruction to obtain a plurality of image tags from an image by using an image tag generating model. The processor 120 may use an image tag generating model, which may be a multi-label recognition model, through the image tag generating module 121. Through the image tag generating module 121, the processor 120 may classify a class corresponding to an image tag based on the features extracted from the image and obtain a plurality of image tags based on the classification result.

The processor 120 may execute the at least one instruction to determine a degree of relevance between the obtained image tags based on an area distribution map corresponding to each image tag in the image. Through the degree-of-relevance analyzing module 123, the processor 120 may determine a combination of image tags among the image tags obtained by the image tag generating module 121. Through the degree-of-relevance analyzing module 123, the processor 120 may generate an area distribution map corresponding to each image tag and compare the generated area distribution maps to obtain a degree of relevance between the image tags obtained by the image tag generating module 121. The area distribution map may be based on an activation map or an attention map corresponding to each image tag. Through the degree-of-relevance analyzing module 123, the processor 120 may generate a mask corresponding to each of the generated area distribution maps and obtain a degree of relevance between the image tags obtained by the image tag generating module 121, based on the degree of overlap between the generated masks. Through the degree-of-relevance analyzing module 123, the processor 120 may generate a bounding box corresponding to each of the generated area distribution maps and obtain a degree of relevance between the image tags obtained by the image tag generating module 121, based on the degree of overlap between the generated bounding boxes.

Through the degree-of-relevance analyzing module 123, the processor 120 may determine a combination of image tags from the selected image tags among the image tags obtained by the image tag generating module 121. Through the degree-of-relevance analyzing module 123, the processor 120 may determine a combination of image tags from the selected image tags according to the word classes of the image tags obtained by the image tag generating module 121 or according to whether the obtained image tags are in a relationship corresponding to an object and a property of the object. Through the degree-of-relevance analyzing module 123, the processor 120 may determine a degree of relevance between image tags belonging to the combination of image tags based on the comparison result of the area distribution map for each combination of image tags.

The processor 120 may execute the at least one instruction to generate a combined tag with interconnected image tags therein based on the degree of relevance determined by the degree-of-relevance analyzing module 123.. Through the combined tag generating module 125, the processor 120 may generate a combined tag with the obtained image tags interconnected therein when the degree of relevance between the image tags obtained by the image tag generating module 121 is greater than or equal to a defined threshold value. Through the combined tag generating module 125, based on the probability of being input as a search query, the processor 120 may determine the connection order of the image tags and determine whether to change the ending of the image tag, to interconnect the image tags obtained by the image tag generating module 121.

By executing the at least one instruction, the processor 120 may perform image tagging on the image by using the image tags obtained by the image tag generating module 121 and the combined tag generated by the combined tag generating module 125. Through the image tagging module 127, the processor 120 may perform image tagging on the image by adding the combined tag generated by the combined tag generating module 125 as well as the image tags obtained by the image tag generating module 121 by using the image tag generating model. Through the image tagging module 127, the processor 120 may store a tagged image in the memory 110 by associating an image with a combined tag as well as an image tag for the image.

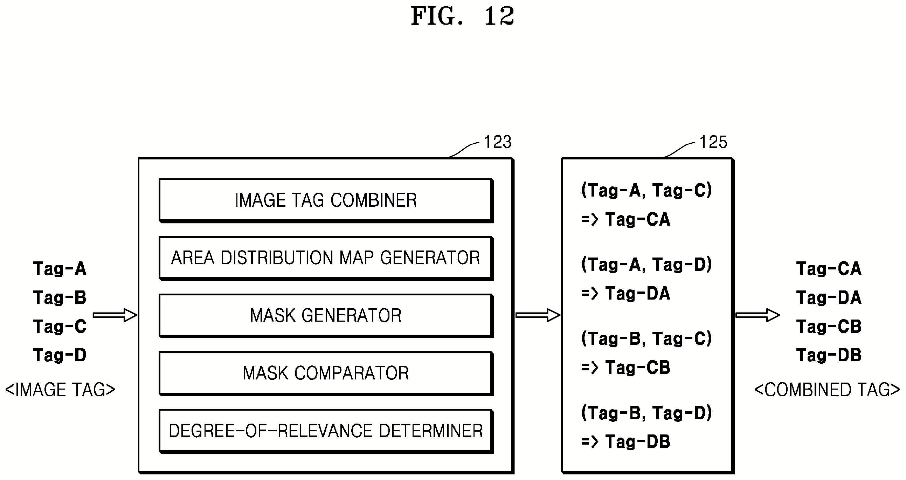

FIG. 12 is a block diagram illustrating the operation of a degree-of-relevance analyzing module 123 and a combined tag generating module 125, according to an embodiment of the disclosure.

According to an embodiment of the disclosure, the degree-of-relevance analyzing module 123 may include an image tag combiner, an area distribution map generator, a mask generator, a mask comparator, and a degree-of-relevance determiner. The degree-of-relevance analyzing module 123 may receive a plurality of image tags as an input. Referring to FIG. 12, a plurality of image tags Tag-A, Tag-B, Tag-C, and Tag-D may be obtained for an image.

The image tag combiner may generate all possible combinations of image tags. As illustrated in FIG. 12, when a total of four image tags are input to the degree-of-relevance analyzing module, the image tag combiner may generate a combination of image tags including two image tags, three image tags, or four image tags.

The area distribution map generator may generate an area distribution map corresponding to each of the image tags. The area distribution map generator may generate an area distribution map for each image tag, which indicates a portion of the image that has influenced classification as a class corresponding to each image tag. For example, an area distribution map corresponding to Tag-A may indicate an image area in the image that has influenced classification as a class corresponding to Tag-A. An area distribution map corresponding to Tag-B may indicate an image area in the image that has influenced classification as a class corresponding to Tag-B.

The mask generator may generate a mask corresponding to each area distribution map generated for each image tag. The mask generator may indicate a portion used to generate an image tag by masking the other portions other than a portion used to generate an image tag in the area distribution map. For example, a mask of the area distribution map corresponding to Tag-A may be generated by masking the other portions other than a portion used to generate Tag-A in the area distribution map corresponding to Tag-A. For example, a mask of the area distribution map corresponding to Tag-B may be generated by masking the other portions other than a portion used to generate Tag-B in the area distribution map corresponding to Tag-B.

The mask comparator may compare the similarities between the masks respectively corresponding to the respective area distribution maps generated for the respective image tags for a particular image. For example, the mask comparator may determine a degree of overlap between the masks respectively corresponding to the area distribution maps generated for the respective image tags. The mask comparator may determine a degree of overlap between the masks corresponding to the image tags for all the combinations of image tags generated by the image tag combiner.

According to an embodiment of the disclosure, the mask generator may be replaced with a bounding box generator, and the mask comparator may be replaced with a bounding box comparator. The bounding box generator may generate a bounding box corresponding to each area distribution map generated for each image tag. The bounding box generator may indicate a certain area including a portion used to generate an image tag by surrounding a certain area including a portion used to generate an image tag with a figure such as a square in the area distribution map. The bounding box comparator may compare the similarities between the bounding boxes respectively corresponding to the respective area distribution maps generated for the respective image tags for a particular image. For example, the bounding box comparator may determine a degree of overlap between the bounding boxes respectively corresponding to the area distribution maps generated for the respective image tags. The bounding box comparator may determine a degree of overlap between the bounding boxes corresponding to the image tags for all the combinations of image tags generated by the image tag combiner.

The degree-of-relevance determiner may obtain a degree of relevance between the image tags based on the determined degree of overlap. The degree-of-relevance determiner may determine that the degree of relevance between the image tags is higher as the degree of overlap between the masks or bounding boxes respectively corresponding to the respective area distribution maps generated for the respective image tags is higher. Based on the determined degree of overlap, the degree-of-relevance determiner may output, to the combined tag generating module 125, a combination of image tags whose degree of relevance between the image tags is greater than or equal to a defined threshold value. Referring to FIG. 12, it may be seen that the degree-of-relevance determiner determines whether the degree of relevance between the image tags is greater than or equal to a defined threshold value and outputs, to the combined tag generating module 125, (Tag-A, Tag-C), (Tag-A, Tag-D), (Tag-B, Tag-C), and (Tag-B, Tag-D) among the combinations of image tags generated by the image tag combiner.

The combined tag generating module 125 may generate a combined tag by interconnecting the image tags belonging to the combination of image tags input from the degree-of-relevance analyzing module 123. Based on the probability of being input as a search query, the combined tag generating module 125 may determine the connection order of the image tags and determine whether to change the ending of the image tag, to interconnect the image tags belonging to the combination of image tags.

Referring to FIG. 12, it may be seen that the combined tag generating module 125 generates Tag-CA as a combined tag from a combination of image tags of (Tag-A, Tag-C), generates Tag-DA as a combined tag from a combination of image tags of (Tag-A, Tag-D), generates Tag-CB as a combined tag from a combination of image tags of (Tag-B, Tag-C), and generates Tag-DB as a combined tag from a combination of image tags of (Tag-B, Tag-D) to generate a plurality of combined tags. According to the example of FIG. 5, the combined tag generating module 125 may generate a combined tag 'red people' from a combination of image tags of (people, red) by determining the connection order of image tags and whether to change the ending of the image tag. The combined tag generating module 125 may generate a combined tag 'running people' from a combination of image tags of (people, running). The combined tag generating module 125 may generate a combined tag 'red car' from a combination of image tags of (car, red). The combined tag generating module 125 may generate a combined tag 'running car' from a combination of image tags of (car, running).

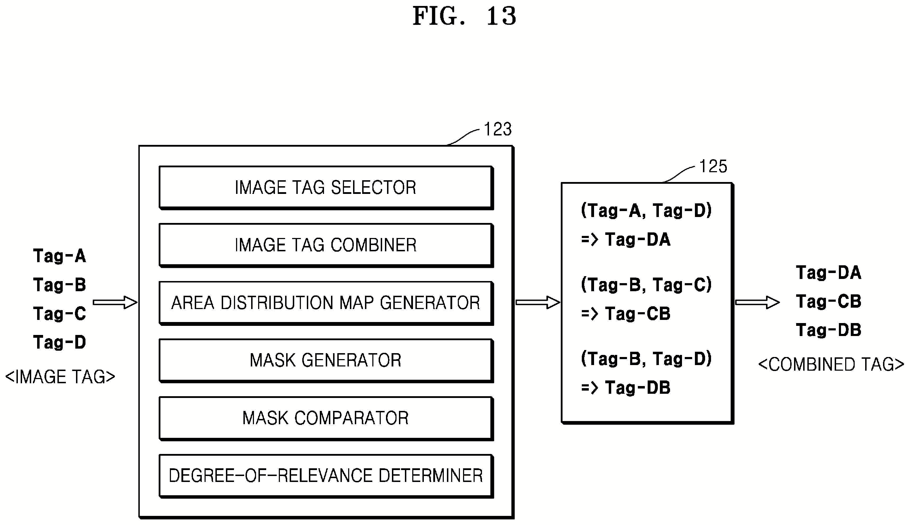

FIG. 13 is a block diagram illustrating the operation of a degree-of-relevance analyzing module 123 and a combined tag generating module 125, according to an embodiment of the disclosure.

According to an embodiment of the disclosure, the degree-of-relevance analyzing module 123 may include an image tag selector, an image tag combiner, an area distribution map generator, a mask generator, a mask comparator, and a degree-of-relevance determiner. Redundant descriptions with those given above with reference to FIG. 12 will be omitted for conciseness.

The image tag selector may select an image tag according to the word class of image tags among the image tags. The image tag selector may select an image tag by identifying the word class of each image tag. For example, the image tag selector may select an image tag to be used to generate a combination of image tags, based on a general combination such as 'adjective + noun', 'verb + noun', 'verb + adjective + noun', or 'noun + noun'.

The image tag selector may select an image tag among the image tags according to whether the image tags is in a relationship corresponding to an object and a property of the object. The image tag selector may select an image tag to be used to generate a combination of image tags, based on whether each image tag relates to an object or to an attribute or motion of the object.

The image tag selector may select an image tag by considering a combination of image tags that are likely to be a search query. On the contrary, when a combination of image tags is unsuitable for a search query or may not be a search query, the image tags may not be selected. The image tag selector may use a lookup table, an ontology database for words, and a word association analyzing model that may be used as a reference for selecting an image tag.

The image tag combiner may generate a combination of image tags based on the image tags selected by the image tag selector. The image tag combiner may generate only a combination of image tags including the image tags selected by the image tag selector, instead of generating a combination of image tags based on all the image tags input to the degree-of-relevance analyzing module 123.

The area distribution map generator may generate an area distribution map corresponding to each of the image tags belonging to the combination of image tags, based on the combination of image tags generated by the image tag combiner. The mask generator may generate a mask corresponding to each area distribution map generated for each image tag. The mask comparator may determine a degree of overlap between the masks corresponding to the image tags for the combinations of image tags generated by the image tag combiner.

According to an embodiment of the disclosure, the mask generator may be replaced with a bounding box generator, and the mask comparator may be replaced with a bounding box comparator. The bounding box generator may generate a bounding box corresponding to each area distribution map generated for each image tag. The bounding box comparator may determine a degree of overlap between the bounding boxes corresponding to the image tags for the combination of image tags generated by the image tag combiner.

Based on the determined degree of overlap, the degree-of-relevance determiner may output, to the combined tag generating module 125, a combination of image tags whose degree of relevance between the image tags is greater than or equal to a defined threshold value. Referring to FIG. 13, it may be seen that the degree-of-relevance determiner determines whether the degree of relevance between the image tags is greater than or equal to a defined threshold value and outputs, to the combined tag generating module 125, (Tag-A, Tag-D), (Tag-B, Tag-C), and (Tag-B, Tag-D) among the combinations of image tags generated by the image tag combiner.

The combined tag generating module 125 may generate a combined tag by interconnecting the image tags belonging to the combination of image tags input from the degree-of-relevance analyzing module 123.

Referring to FIG. 13, it may be seen that the combined tag generating module 125 generates Tag-DA as a combined tag from a combination of image tags of (Tag-A, Tag-D), generates Tag-CB as a combined tag from a combination of image tags of (Tag-B, Tag-C), and generates Tag-DB as a combined tag from a combination of image tags of (Tag-B, Tag-D) to generate a plurality of combined tags. According to the example of FIG. 5, the combined tag generating module 125 may generate a combined tag 'running people' from a combination of image tags of (people, running) by determining the connection order of image tags and whether to change the ending of the image tag. The combined tag generating module 125 may generate a combined tag 'red car' from a combination of image tags of (car, red). The combined tag generating module 125 may generate a combined tag 'running car' from a combination of image tags of (car, running). However, unlike the case of FIG. 12, in FIG. 13, it may be seen that a combination of image tags of (people, red) is excluded from being generated and thus a combined tag 'red people' is not generated.

The embodiments of the disclosure may also be implemented in the form of a computer-readable recording medium including instructions executable by a computer, such as program modules executed by a computer. The computer-readable recording mediums may be any available mediums accessible by computers and may include both volatile and non-volatile mediums and detachable and non-detachable mediums. Also, the computer-readable recording mediums may include computer storage mediums and communication mediums. The computer storage mediums may include both volatile and non-volatile and detachable and non-detachable mediums implemented by any method or technology for storage of information such as computer-readable instructions, data structures, program modules, or other data. The communication medium may generally include computer-readable instructions, data structures, or other data of modulated data signals such as program modules.

Also, the computer-readable storage medium may be provided in the form of a non-transitory storage medium. Here, the term "non-transitory storage medium" may mean that the storage medium is a tangible device and does not include signals (e.g., electromagnetic waves), and may indicate that data may be semipermanently or temporarily stored in the storage medium. For example, the "non-transitory storage medium" may include a buffer in which data is temporarily stored.

According to an embodiment of the disclosure, the method according to various embodiments of the disclosure described herein may be included and provided in a computer program product. The computer program product may be traded as a product between a seller and a buyer. The computer program product may be distributed in the form of a machine-readable storage medium (e.g., a compact disc read only memory (CD-ROM)) or may be distributed (e.g., downloaded or uploaded) online through an application store or directly between two user devices (e.g., smartphones). In the case of online distribution, at least a portion of the computer program product (e.g., a downloadable app) may be at least temporarily stored or temporarily generated in a machine-readable storage medium such as a memory of a manufacturer server, a memory of an application store server, or a memory of a relay server.

According to an embodiment of the disclosure, a method of performing image tagging is provided. The method of performing image tagging may include obtaining a plurality of image tags from an image by using an image tag generating model (S310). The method of performing image tagging may include determining a degree of relevance between the obtained image tags based on an area distribution map corresponding to each image tag in the image (S320). The method of performing image tagging may include generating a combined tag with interconnected image tags therein based on the determined degree of relevance (S330). The method of performing image tagging may include performing image tagging on the image by using the obtained image tags and the generated combined tag (S340).

According to an embodiment of the disclosure, the determining of the degree of relevance (S320) may include generating the area distribution map corresponding to each image tag (S410, S420). The determining of the degree of relevance (S320) may include obtaining the degree of relevance between the obtained image tags by comparing the generated area distribution maps (S430, S440).

The obtaining of the degree of relevance (S430, S440) may include generating a mask corresponding to each of the generated area distribution maps (S430). The obtaining of the degree of relevance (S430, S440) may include determining the degree of relevance between the obtained image tags based on a degree of overlap between the generated masks (S440).

The obtaining of the degree of relevance (S430, S440) may include generating a bounding box corresponding to each of the generated area distribution maps (S430). The obtaining of the degree of relevance (S430, S440) may include determining the degree of relevance between the obtained image tags based on a degree of overlap between the generated bounding boxes (S440).

According to an embodiment of the disclosure, the determining of the degree of relevance (S320) may include determining a combination of image tags from selected image tags among the obtained image tags (S410). The determining of the degree of relevance (S320) may include determining a degree of relevance between image tags belonging to the combination of image tags based on a result of comparison of the area distribution map for each combination of image tags (S420, S430, S440).

The determining of the combination of image tags (S410) may include determining the combination of image tags from the selected image tags according to the word classes of the obtained image tags or according to whether the obtained image tags are in a relationship corresponding to an object and a property of the object.

According to an embodiment of the disclosure, the area distribution map may be based on an activation map or an attention map corresponding to each of the image tags.

According to an embodiment of the disclosure, the generating of the combined tag (S330) may include generating a combined tag with the obtained image tags interconnected therein when the degree of relevance between the obtained image tags is greater than or equal to a defined threshold value.

The generating of the combined tag (S330) may include interconnecting the obtained image tags by determining a connection order of image tags based on a probability of being input as a search query and determining whether to change an ending of an image tag.

According to an embodiment of the disclosure, the obtaining of the plurality of image tags (S310) may include classifying a class corresponding to an image tag based on features extracted from the image by using the image tag generating model, which is a multi-label recognition model, and obtaining the plurality of image tags based on a result of the classifying.

According to an embodiment of the disclosure, a computer-readable recording medium having recorded thereon a program for executing the above method of performing image tagging is provided.

According to an embodiment of the disclosure, an apparatus for performing image tagging is provided. The apparatus for performing image tagging may include memory (110) storing at least one instruction, and at least one processor (120) operatively connected to the memory (110) to execute the at least one instruction. The at least one processor (120) may be configured to execute the at least one instruction to obtain a plurality of image tags from an image by using an image tag generating model. The at least one processor (120) may be configured to execute the at least one instruction to determine a degree of relevance between the obtained image tags based on an area distribution map corresponding to each image tag in the image. The at least one processor (120) may be configured to execute the at least one instruction to generate a combined tag with interconnected image tags therein based on the determined degree of relevance. The at least one processor (120) may be configured to execute the at least one instruction to perform image tagging on the image by using the obtained image tags and the generated combined tags.

According to an embodiment of the disclosure, the at least one processor (120) may be configured to execute the at least one instruction to generate the area distribution map corresponding to each image tag and obtain the degree of relevance between the obtained image tags by comparing the generated area distribution maps.

The at least one processor (120) may be configured to execute the at least one instruction to generate a mask corresponding to each of the generated area distribution maps and determine the degree of relevance between the obtained image tags based on a degree of overlap between the generated masks.

The at least one processor (120) may be configured to execute the at least one instruction to generate a bounding box corresponding to each of the generated area distribution maps and determine the degree of relevance between the obtained image tags based on a degree of overlap between the generated bounding boxes.

According to an embodiment of the disclosure, the at least one processor (120) may be configured to execute the at least one instruction to determine a combination of image tags from selected image tags among the obtained image tags and determine a degree of relevance between image tags belonging to the combination of image tags based on a result of comparison of the area distribution map for each combination of image tags.

The at least one processor (120) may be configured to execute the at least one instruction to determine the combination of image tags from the selected image tags according to the word classes of the obtained image tags or according to whether the obtained image tags are in a relationship corresponding to an object and a property of the object.

According to an embodiment of the disclosure, the area distribution map may be based on an activation map or an attention map corresponding to each of the image tags.

According to an embodiment of the disclosure, the at least one processor (120) may be configured to execute the at least one instruction to generate a combined tag with the obtained image tags interconnected therein when the degree of relevance between the obtained image tags is greater than or equal to a defined threshold value.

Th at least one processor 120 may be configured to execute the at least one instruction to interconnect the obtained image tags by determining a connection order of image tags based on a probability of being input as a search query and determining whether to change an ending of an image tag.

The foregoing descriptions of the disclosure are merely examples, and those of ordinary skill in the art will readily understand that various modifications may be made therein without materially departing from the spirit or features of the disclosure. Therefore, it is to be understood that the embodiments described above should be considered in a descriptive sense only and not for purposes of limitation. For example, each component described as a single type may also be implemented in a distributed manner, and likewise, components described as being distributed may also be implemented in a combined form.

The scope of the disclosure is defined not by the above detailed description but by the following claims, and all modifications derived from the meaning and scope of the claims and equivalent concepts thereof should be construed as being included in the scope of the disclosure.

## Claims

1. A method of performing image tagging, the method comprising:
obtaining a plurality of image tags from an image using an image tag generating model (S310);
determining a degree of relevance between the plurality of image tags based on a plurality of area distribution maps respectively corresponding to the plurality of image tags (S320);
generating a combined tag with interconnected image tags therein based on the degree of relevance (S330); and
performing image tagging on the image using the plurality of image tags and the combined tag (S340).

2. The method of claim 1, wherein the determining of the degree of relevance (S320) comprises:
generating the plurality of area distribution maps (S410, S420); and
obtaining the degree of relevance between the plurality of image tags by comparing the plurality of area distribution maps (S430, S440).

3. The method of claim 1 or 2, wherein the obtaining of the degree of relevance (S430, S440) comprises:
generating a plurality of masks respectively corresponding to the plurality of area distribution maps (S430); and
determining the degree of relevance between the plurality of image tags based on a degree of overlap between the plurality of masks (S440).

4. The method of any of claims 1 to 3, wherein the obtaining of the degree of relevance (S430, S440) comprises:
generating a plurality of bounding boxes respectively corresponding to the plurality of area distribution maps (S430); and
determining the degree of relevance between the plurality of image tags based on a degree of overlap between the plurality of bounding boxes (S440).

5. The method of any of claims 1 to 4, wherein the determining of the degree of relevance (S320)comprises:
determining a combination of image tags from selected image tags among the plurality of image tags (S410); and
determining a degree of relevance between image tags of the combination of image tags based on a result of a comparison of the area distribution map of each image tag of the combination of image tags (S420, S430, S440).

6. The method of any of claims 1 to 5, wherein the determining of the combination of image tags (S410) comprises determining the combination of image tags from the selected image tags based on word classes of the plurality of image tags or based on whether the plurality of image tags are in a relationship corresponding to an object and a property of the object.

7. The method of any of claims 1 to 6, wherein each area distribution map of the plurality of area distribution maps is based on an activation map or an attention map respectively corresponding to the plurality of image tags.

8. The method of any of claims 1 to 7, wherein the generating of the combined tag (S330) comprises generating the combined tag with the plurality of image tags interconnected therein based on the degree of relevance between the plurality of image tags being greater than or equal to a predefined threshold value.

9. The method of any of claims 1 to 8, wherein the generating of the combined tag (S330) comprises interconnecting the plurality of image tags by determining a connection order of image tags based on a probability of being input as a search query and determining whether to change an ending of at least one image tag of the plurality of image tags.

10. The method of any of claims 1 to 9, wherein the obtaining of the plurality of image tags (S310) comprises:
classifying a class corresponding to an image tag based on features extracted from the image using the image tag generating model, wherein the image tag generating model comprises a multi-label recognition model; and
obtaining the plurality of image tags based on a result of the classifying.

11. An apparatus for performing image tagging, the apparatus comprising:
memory (110) storing at least one instruction; and
at least one processor (120) operatively connected to the memory (110),
wherein the at least one processor (120) is configured to execute the at least one instruction to:
obtain a plurality of image tags from an image using an image tag generating model,
determine a degree of relevance between the plurality of image tags based on a plurality of area distribution maps respectively corresponding to the plurality of image tags,
generate a combined tag with interconnected image tags therein based on the degree of relevance, and
perform image tagging on the image using the plurality of image tags and the combined tag.

12. The apparatus of claim 11, wherein the at least one processor (120) is further configured to execute the at least one instruction to generate the plurality of area distribution maps, and obtain the degree of relevance between the plurality of image tags by comparing the plurality of area distribution maps.

13. The apparatus of claim 11 or 12, wherein the at least one processor (120) is further configured to execute the at least one instruction to generate a plurality of masks respectively corresponding to the plurality of area distribution maps and determine the degree of relevance between the plurality of image tags based on a degree of overlap between the plurality of masks.

14. The apparatus of any of claims 11 to 13, wherein the at least one processor (120) is further configured to execute the at least one instruction to determine a combination of image tags from selected image tags among the plurality of image tags and determine a degree of relevance between image tags of the combination of image tags based on a result of a comparison of the area distribution map of each image tag of the combination of image tags.

15. A computer-readable storage medium storing instructions that, when executed by at least one processor, cause the at least one processor to:
obtain a plurality of image tags from an image using an image tag generating model,
determine a degree of relevance between the plurality of image tags based on a plurality of area distribution maps respectively corresponding to the plurality of image tags,
generate a combined tag with interconnected image tags therein based on the degree of relevance, and
perform image tagging on the image using the plurality of image tags and the combined tag.
